# EUROPEAN PATENT APPLICATION

(11) **EP 4 553 801 A1**
(43) Date of publication of application: **14.05.2025**
(21) Application number: 23874467.6
(22) Date of filing: 15.05.2023
(51) Int. Cl.: G07G 1/12, G07G 1/00, G07G 1/01

(54) **PAYMENT DEVICE AND RECORDING MEDIUM**

(30) Priority: 05.10.2022 JP 2022160882
(71) Applicant: Toshiba TEC Kabushiki Kaisha, Tokyo 141-8562 (JP)
(72) Inventor: KARITA, Yoshihiro, Izunokuni-shi, Shizuoka 410-2392 (JP); KUDO, Yuya, Tokyo 141-8562 (JP); TOMINAGA, Shinji, Tokyo 141-8562 (JP)
(74) Representative: Bandpay & Greuter
(86) International application number: PCT/JP2023/018071
(87) International publication number: WO 2024/075331

(57) **Abstract**

A checkout device includes a first acquisition unit, a second acquisition unit, and a checkout unit. The first acquisition unit acquires information on a product to be purchased by a customer based on data input by the customer's operation on an input device. The second acquisition unit acquires, from an external system, information on a product to be purchased by a customer, the information stored in the external system, based on data input by the customer's operation on an information terminal. The checkout unit makes a checkout based on the information on the product acquired by the first acquisition unit and the second acquisition unit.

## Description

### FIELD

Embodiments described herein relate generally to a checkout device and a recording medium.

### BACKGROUND

In recent years, a self-POS (Point Of Sales) terminal has been introduced in retail stores such as supermarkets from the viewpoint of reducing labor costs, infection prevention measures for infectious diseases, and the like. The self-POS terminal is a full-self-handling checkout device in which a customer performs operations related to a checkout from the registration of a purchased product to expense payment.

Recently, a self-registration system using an information terminal such as a smartphone or a tablet terminal has attracted attention. In the self-registration system, a customer performs the registration operation of a purchased product by himself/herself using an information terminal in a sales room in which products are displayed. When the customer finishes registering the purchased product, the customer performs an operation for declaring checkout on the information terminal. With this operation, a checkout code including a barcode or a two-dimensional code is displayed on a display device of the information terminal, and thus, the customer moves to a checkout room and reads the checkout code with a scanner provided in a checkout device. Then, the information on the product registered by the information terminal is sent to the checkout device and the charge is calculated, so that the customer pays the charge.

As described above, the self-registration system using the information terminal does not require the checkout device to perform the operation of registering the purchased product, and thus the time required for checkout is shortened. However, meanwhile, it cannot be denied that there is a customer who does not want to use the information terminal because the operation is complicated. For this reason, there is demand from retail stores considering the introduction of a self-registration system using an information terminal to retain a full-self-handling checkout system using a self-POS terminal for use in combination. When the full-self-handling checkout system and the self-registration system are used in combination, a checkout device for the self-registration system is required in the checkout room separately from the self-POS terminal. For this reason, it is necessary to secure an installation place, and there is a problem that maintenance cost of the device is increased. Such a problem can be solved by making the self-POS terminal usable also as the checkout device for the self-registration system.

### CITATION LIST

### PATENT LITERATURE

Patent Literature 1: Jpn. Pat. Appln. KOKAI Publication No. 2013-541107

### SUMMARY

A problem to be solved by an embodiment of the present invention is to provide a full-self-handling checkout device that can also be used as a checkout device for a self-registration system.

### BRIEF DESCRIPTION OF THE DRAWINGS

FIG. 1 is a schematic configuration diagram of a self-checkout system according to an embodiment.
FIG. 2 is a schematic diagram illustrating a main data structure stored in a shopping file.
FIG. 3 is a block diagram illustrating a main circuit configuration of an information terminal.
FIG. 4 is a schematic diagram illustrating an external configuration of a self-POS terminal.
FIG. 5 is a block diagram illustrating a main circuit configuration of a self-POS terminal.
FIG. 6 is a schematic diagram illustrating a main data structure stored in a transaction file.
FIG. 7 is a flowchart illustrating a main procedure of information processing executed by a processor of an information terminal according to a self-registration program.
FIG. 8 is a flowchart illustrating a main procedure of shopping start notification command reception processing executed by a terminal controller.
FIG. 9 is a flowchart illustrating a main procedure of product registration notification command reception processing executed by a terminal controller.
FIG. 10 is a flowchart illustrating a main procedure of checkout notification command reception processing executed by a terminal controller.
FIG. 11 is a flowchart illustrating a main procedure of information processing executed by a processor of a self-POS terminal according to a checkout program.
FIG. 12 is a flowchart illustrating a main procedure of information processing executed by a processor of a self-POS terminal according to a checkout program.
FIG. 13 is a flowchart illustrating a main procedure of information processing executed by a processor of a self-POS terminal according to a checkout program.
FIG. 14 is a flowchart illustrating a main procedure of inquiry command reception processing executed by a terminal controller.
FIG. 15 is a schematic diagram illustrating an example of a start screen displayed on a touch panel of a self-POS terminal.
FIG. 16 is a schematic diagram illustrating an example of a bag selection screen displayed on a touch panel of a self-POS terminal.
FIG. 17 is a schematic diagram illustrating an example of a registration screen displayed on a touch panel of a self-POS terminal.
FIG. 18 is a schematic diagram illustrating an example of a pop-up image displayed on a touch panel of a self-POS terminal.
FIG. 19 is a schematic diagram illustrating an example of a registration screen displayed on a touch panel of a self-POS terminal.
FIG. 20 is a schematic diagram illustrating an example of a payment screen displayed on a touch panel of a self-POS terminal.
FIG. 21 is a schematic diagram illustrating an example of a first checkout completion screen displayed on a touch panel of a self-POS terminal.
FIG. 22 is a schematic diagram illustrating an example of a second checkout completion screen displayed on a touch panel of a self-POS terminal.
FIG. 23 is a schematic diagram illustrating an example of a screen displayed on a display device of an attendant terminal.

### DETAILED DESCRIPTION

In an embodiment, a checkout device includes a first acquisition unit, a second acquisition unit, and a checkout unit. The first acquisition unit acquires information on a product to be purchased by a customer based on data input by the customer's operation on an input device. The second acquisition unit acquires, from an external system, information on a product to be purchased by a customer, the information stored in the external system, based on data input by the customer's operation on an information terminal. The checkout unit makes a checkout based on the information on the product acquired by the first acquisition unit and the second acquisition unit.

Hereinafter, an embodiment of a full-self-handling checkout device that can also be used as a checkout device for a self-registration system will be described with reference to the drawings. Note that, hereinafter, the full-self-handling checkout device is referred to as a self-POS terminal.

### (Description of Self-Checkout System)

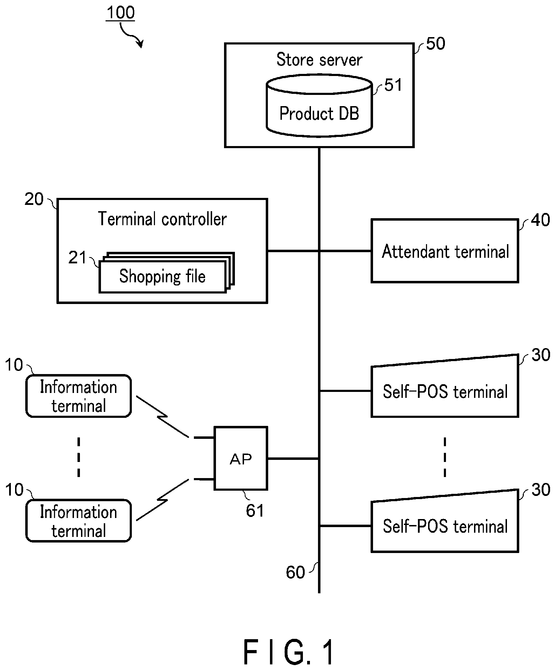

FIG. 1 is a schematic configuration diagram of a self-checkout system 100 according to the present embodiment. The self-checkout system 100 includes a plurality of information terminals 10, a terminal controller 20, a plurality of self-POS terminals 30, an attendant terminal 40, and a store server 50. The self-checkout system 100 connects the terminal controller 20, the self-POS terminal 30, the attendant terminal 40, and the store server 50 via a communication network 60 such as a local area network (LAN) in a bidirectional communicable manner. The self-checkout system 100 connects one or a plurality of access points 61 to the communication network 60. The access point 61 functions as a repeater for data communication using radio between the plurality of information terminals 10 and the terminal controller 20.

The self-checkout system 100 having such a configuration is constructed in a retail store such as a supermarket in which a sales room and an checkout room are separated. In this type of retail store, a customer puts a product in a shopping basket, a shopping cart, or the like from among products displayed in the sales room. When the customer finishes shopping in the sales room, the customer moves to the checkout room and performs checkout for the purchased product. In order to pay the charge, it is necessary to register information on the purchased product. Examples of a method for registering the information on the purchased product include a first method in which a customer registers the information on a purchased product using a self-POS terminal 30 in a checkout room, and a second method in which a customer registers the information on a purchased product using an information terminal 10 in a sales room. The self-checkout system 100 is a system in which the first method and the second method can be used in combination.

The information terminal 10 is a wireless communication terminal for a self-registration system used by a customer to register a product to be purchased, that is, a purchased product in a sales room in which products are displayed. The information terminal 10 may be a smartphone owned by a customer, or may be a mobile terminal or a tablet terminal or the like lent out to a customer by a store. The tablet terminal is attached to a shopping cart and lent out to a customer. The smartphone or the mobile terminal is used by being held by a customer or placed on a terminal placement unit of a shopping cart.

The terminal controller 20 is a computer device for supporting a self-registration function of the information terminal 10. For the support, the terminal controller 20 creates a shopping file 21 for each information terminal 10. The terminal controller 20 stores the data of a product registered by the information terminal 10 in a shopping file 21. When a checkout declaration is made in the information terminal 10, the terminal controller 20 transfers the data of the shopping file 21 to the self-POS terminal 30 which is a checkout device.

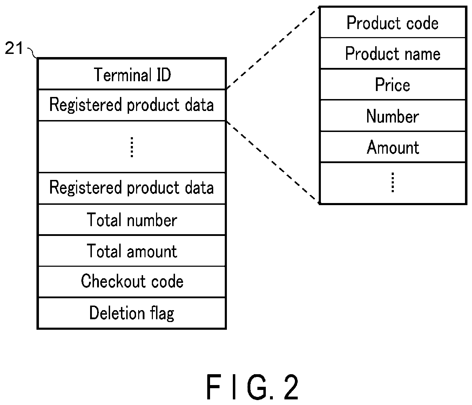

FIG. 2 is a schematic diagram illustrating a main data structure stored in the shopping file 21. As illustrated in the drawing, the shopping file 21 stores data such as a terminal ID, registered product data, a total number, a total amount, a checkout code, and a deletion flag.

The terminal ID is a unique identifier set for each information terminal 10 in order to individually identify the information terminal 10. The registered product data is data created for each product registered by the information terminal 10 identified by the terminal ID. The registered product data includes items such as a product code, a product name, a price, a number, and an amount. The number is the registration number of the same product. The amount corresponds to registration number. The shopping file 21 may store a plurality of registered product data. The total number is a number obtained by adding the registration numbers of the registered product data. The total amount is an amount obtained by adding the registration amounts of the registered product data.

The checkout code is an identification code generated in response to the checkout declaration being made in the information terminal 10 identified by the terminal ID. A barcode representing a checkout code is displayed on the display device of the information terminal 10. The checkout code may be represented by a two-dimensional code.

The deletion flag is 1-bit data for identifying whether or not the shopping file 21 is in a deletion state. The shopping file 21 is in a deletion state when the price of the product specified by the registered product data is paid and the checkout is completed. In the present embodiment, the deletion flag in the deletion state is set to "1", and the deletion flag in the non-deletion state is set to "0".

The description returns to FIG. 1.

The self-POS terminal 30 is a full-self-handling checkout device in which a customer performs an operation related to checkout of a commercial transaction from registration of a purchased product to expense payment. The self-POS terminal 30 is also a checkout device used for expense payment of a purchased product self-registered by a customer using the information terminal 10. That is, the self-POS terminal 30 is also used as a checkout device for a self-registration system using the information terminal 10.

The attendant terminal 40 is a monitoring device installed in a monitoring room provided in the vicinity of the exit of the checkout room. The attendant terminal 40 is used by an employee in the monitoring room, a so-called attendant. The attendant terminal 40 displays, for each self-POS terminal 30, the information on the purchased products registered in the self-POS terminal 30, and the information on the expense payment, and the like on the display device. The attendant terminal 40 also displays information such as an error occurring in the self-POS terminal 30. The attendant monitors the checkout room based on the information displayed on the attendant terminal 40.

Note that although the number of attendant terminals 40 is one in FIG. 1, a plurality of attendant terminals 40 may be connected to the communication network 60. At least one of them may be installed in a place different from the above-described monitoring room, for example, another floor of the same store such as a back office, or a help desk or the like. The attendant terminal 40 at a place far away from the self-POS terminal 30 can also report error information from the self-POS terminal 30 via the communication network 60. Therefore, even an employee at a place where the self-POS terminal 30 cannot be directly confirmed can monitor the self-POS terminal 30.

The store server 50 includes a product database 51. The product database 51 is an aggregate of product records created for each product. The product record is one record of product data such as a product code, a product name, and a price. The product code is a unique identifier set for each product to individually identify each product. The product name and the price are the sales name and unit price of the product identified by the corresponding product code.

When there is an inquiry using a product code from the terminal controller 20 or the self-POS terminal 30, the store server 50 has a function of searching the product database 51 and providing product data such as a product name and price of a product record including the product code to the terminal controller 20 or the self-POS terminal 30. The store server 50 also has a function of collecting and totalizing the purchased product data registered and processed by each self-POS terminal 30 to manage information such as sales and inventory at the time of product sale in real time.

### (Configuration Description of Information Terminal)

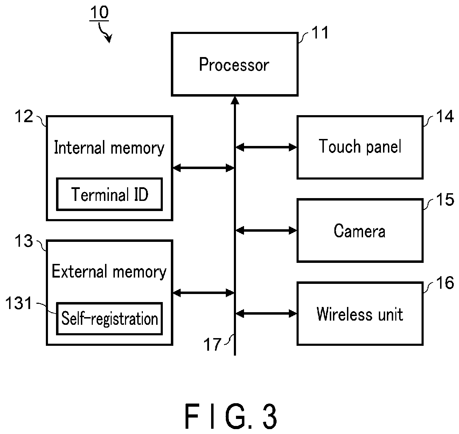

FIG. 3 is a block diagram illustrating the main circuit configuration of the information terminal 10. As illustrated in FIG. 3, the information terminal 10 includes a processor 11, an internal memory 12, an external memory 13, a touch panel 14, a camera 15, a wireless unit 16, and a system transmission path 17. The system transmission path 17 includes an address bus, a data bus, and a control signal line and the like. The information terminal 10 connects the processor 11, the internal memory 12, the external memory 13, the touch panel 14, the camera 15, and the wireless unit 16 to the system transmission path 17. In the information terminal 10, a computer is configured by the processor 11, the internal memory 12, the external memory 13, and the system transmission path 17 connecting them.

The processor 11 corresponds to a central portion of the computer. The processor 11 controls each unit to realize various functions as the information terminal 10 according to an operating system or an application program (application software) . The processor 11 may be, for example, a processing circuit such as a central processing unit (CPU), a graphics processing unit (GPU), an application specific integrated circuit (ASIC), or a programmable logic device (for example, a simple programmable logic device (SPLD), a complex programmable logic device (CPLD), or a field programmable gate array (FPGA). The processor 11 is not limited to being configured as a single processing circuit, and may be configured as the processor 11 by combining a plurality of processing circuits.

The internal memory 12 corresponds to a main storage portion of the computer. The internal memory 12 includes a nonvolatile memory area and a volatile memory area. The internal memory 12 stores an operating system or an application program in the nonvolatile memory area. The internal memory 12 stores data necessary for the processor 11 to execute processing for controlling each unit in the volatile memory area. The internal memory 12 uses the volatile memory area as a work area where data is appropriately rewritten by the processor 11. The nonvolatile memory area is, for example, a read only memory (ROM). The volatile memory area is, for example, a random access memory (RAM).

The external memory 13 corresponds to an auxiliary storage portion of the computer. For example, an SD memory card or a USB memory or the like can be the external memory 13. The external memory 13 stores data used when the processor 11 performs various types of processing, or data created by processing in the processor 11, or the like. The external memory 13 may store the application program described above.

The touch panel 14 is a display device capable of displaying display elements including characters, symbols, and images and the like on a display. The touch panel 14 is also an input device that causes a sensor to detect a touch operation position on the display and performs processing on the assumption that a display element at the position is input.

The camera 15 is an imaging device built in the information terminal 10. The processor 11 has a function as a reading unit that reads a machine-readable code such as a barcode or a two-dimensional code from an image captured by the camera 15. A barcode representing a product code in a predetermined barcode system is attached to many products. That is, the processor 11 can acquire the product code of the product held over the camera 15 by reading the barcode attached to the product from the image captured by the camera 15.

The wireless unit 16 is, for example, a communication device that performs data communication according to a communication protocol of a wireless LAN. The information terminal 10 can perform wireless communication with the access point 61 by the action of the wireless unit 16. The information terminal 10 transmits and receives data signals to and from the terminal controller 20 via this wireless communication.

The information terminal 10 having such a configuration stores a terminal ID unique to the terminal in a nonvolatile memory area of the internal memory 12. The terminal ID may be stored in the external memory 13.

The information terminal 10 stores a self-registration program 131 in the external memory 13. The self-registration program 131 is application software for enabling the registration of a product using the information terminal 10. In other words, by installing the self-registration program 131 in a communication terminal such as a smartphone or a tablet terminal, the communication terminal can be used as the information terminal 10 for the self-registration system. The self-registration program 131 may be stored in the internal memory 12.

### (Configuration Description of Self-POS Terminal)

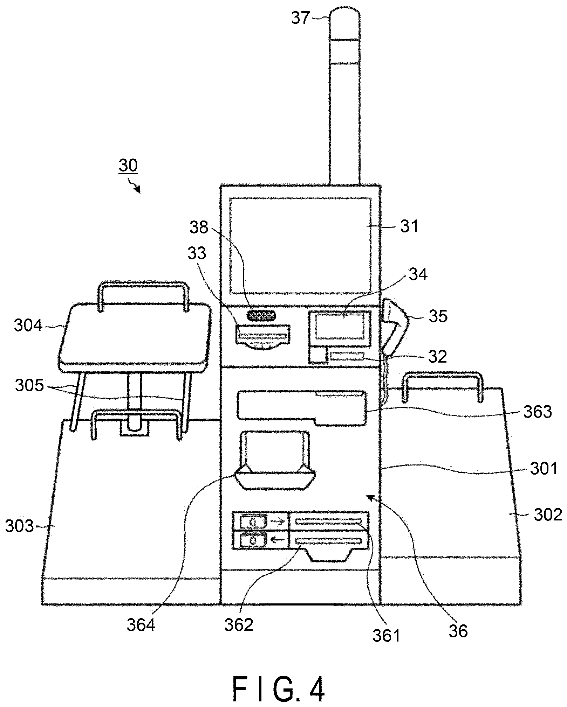

FIG. 4 is a schematic diagram illustrating the external configuration of the self-POS terminal 30. The self-POS terminal 30 includes a main body 301, and a first product placement table 302 and a second product placement table 303 disposed on the left and right of the main body 301. The first product placement table 302 disposed on the right side of the main body 301 is a table on which a customer who is a purchaser places a purchased product. The purchased products are usually put in a shopping basket and placed on the first product placement table 302. The purchased products may be disposed in front of or above the first product placement table 302 in a state of being loaded on the shopping cart.

The second product placement table 303 disposed on the left side of the main body 301 is a table for a customer to bag a purchased product. The customer stores a purchased product in a container prepared on the second product placement table 303, for example, a shopping basket, a plastic shopping bag, or a personal shopping bag. In FIG. 4, the second product placement table 303 is provided with a temporary placing table 304 on its upper portion with a support interposed therebetween. The temporary placing table 304 is, for example, a table for temporarily placing a product before putting the product into a plastic shopping bag or the like. The temporary placing table 304 is provided with two holding arms 305 spaced apart from each other on the left and right. Using these holding arms 305, a customer can place a plastic shopping bag or a personal shopping bag or the like on the second product placement table 303 in an opened state. The mounting positions of the first product placement table 302 and the second product placement table 303 may be reversed in the left-right direction.

The main body 301 includes a touch panel 31, a card reader 32, a printer 33, a scanner 34, a hand scanner 35, an automatic change machine 36, a patrol lamp 37, and a speaker 38 and the like.

The touch panel 31 is a display device capable of displaying display elements including characters, symbols, and images and the like on a display. The touch panel 31 is also an input device that causes a sensor to detect a touch operation position on the display and performs processing on the assumption that a display element at the position is input. In the self-POS terminal 30, various images for supporting the customer's operation are displayed on the touch panel 31.

The card reader 32 is an input device that reads data recorded in a card medium such as a credit card, an electronic money card, or a point card. When the card medium is a magnetic card, the card reader 32 is a magnetic card reader. When the card medium is an IC card, the card reader 32 is an IC card reader. The self-POS terminal 30 may include either one or both of a magnetic card reader and an IC card reader as the card reader 32. The card reader 32 may be a card reader/writer having a function of writing data to a card.

The printer 33 is an output device that prints data related to a purchase receipt or a credit card slip or the like on a receipt sheet. The receipt sheet on which various data are printed by the printer 33 is cut by a cutter and issued from a receipt issuing port. The printer 33 is realized by, for example, a thermal printer, or a dot impact printer or the like.

The scanner 34 and the hand scanner 35 are input devices that read a machine-readable code such as a barcode or a two-dimensional code. The scanner 34 optically reads a machine-readable code held over a reading window (glass window). The hand scanner 35 is manually operated by a customer and optically reads the machine-readable code by being brought close to the machine-readable code.

The automatic change machine 36 is a device that processes cash. The automatic change machine 36 includes a bill insertion port 361, a bill discharge port 362, a coin insertion port 363, and a coin discharge port 364. The automatic change machine 36 processes the bills inserted into the bill insertion port 361. The automatic change machine 36 discharges the bills as change from the bill discharge port 362. The automatic change machine 36 receives and processes the coins inserted into the coin insertion port 363. The automatic change machine 36 discharges the coins as change from the coin discharge port 364.

The patrol lamp 37 provides notification of an alert or the like generated in the self-POS terminal 30 by display. The patrol lamp 37 is attached to the tip of a pole extending in a vertical direction so as to be seen from a distance. The patrol lamp 37 includes a light emitting member and a cylinder. The light emitting member is rotatably attached inside the cylinder coaxially with the cylinder. When the patrol lamp 37 is operated, the light emitting member can be rotated while emitting light.

The speaker 38 provides notification of an alert or the like generated in the self-POS terminal 30 by voice. For example, the speaker 38 emits a buzzer sound according to the state of the alert. Alternatively, the speaker 38 emits a voice of a message according to the state of the alert.

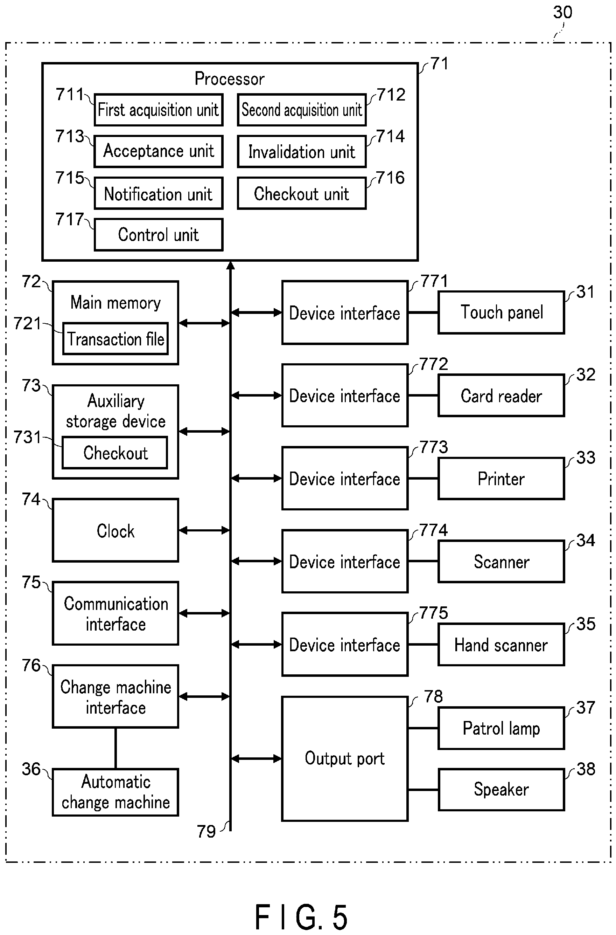

FIG. 5 is a block diagram illustrating the main circuit configuration of the self-POS terminal 30. As illustrated in the drawing, the self-POS terminal 30 includes a processor 71, a main memory 72, an auxiliary storage device 73, a clock 74, a communication interface 75, a change machine interface 76, a plurality of device interfaces 771 to 775, an output port 78, and a system transmission path 79. The system transmission path 79 includes an address bus, a data bus, and a control signal line and the like. The self-POS terminal 30 constitutes a computer by connecting the processor 71 to the main memory 72, the auxiliary storage device 73, the clock 74, the communication interface 75, the change machine interface 76, the plurality of device interfaces 771 to 775, and the output port 78 via the system transmission path 79.

The processor 71 corresponds to a central portion of the computer. The processor 71 controls each unit to realize various functions as the self-POS terminal 30 according to an operating system or an application program. The processor 71 is, for example, a CPU.

The main memory 72 corresponds to a main storage portion of the computer. The main memory 72 includes a nonvolatile memory area and a volatile memory area. The main memory 72 stores an operating system or an application program in the nonvolatile memory area. The main memory 72 may store data necessary for the processor 71 to execute processing for controlling each unit in the nonvolatile or volatile memory area. The main memory 72 uses the volatile memory area as a work area in which data is appropriately rewritten by the processor 71. The nonvolatile memory area is, for example, a ROM. The volatile memory area is, for example, a RAM.

The auxiliary storage device 73 corresponds to an auxiliary storage portion of the computer. For example, an electric erasable programmable read-only memory (EEPROM), a hard disk drive (HDD), or a solid state drive (SSD) or the like can serve as the auxiliary storage device 73. The auxiliary storage device 73 stores data used when the processor 71 performs various types of processing or data created by processing in the processor 71 or the like. The auxiliary storage device 73 may store the application program described above.

The clock 74 measures a date and a time. The processor 71 processes the date and time measured by the clock 74 as the current date and time.

The communication interface 75 is a circuit for performing data communication with an external device connected via the communication network 60. The terminal controller 20, the attendant terminal 40, and the store server 50 and the like correspond to external devices.

The change machine interface 76 is a circuit for performing data communication with the automatic change machine 36. For example, the change machine interface 76 receives inserted amount data, which is the total amount of the bills and coins input into the bill insertion port 361 and the coin insertion port 363 of the automatic change machine 36, from the automatic change machine 36. The change machine interface 76 transmits change data of a change amount calculated from the inserted amount and the payment amount to the automatic change machine 36. In the automatic change machine 36 that has received the change data, bills and coins corresponding to the change amount are paid from the bill discharge port 362 and the coin discharge port 364.

The device interface 771 connects the touch panel 31. The device interface 771 outputs image display data to the touch panel 31. The device interface 771 receives a detection signal of a touch operation from the touch panel 31.

The device interface 772 connects the card reader 32. The device interface 772 receives card data read by the card reader 32.

The device interface 773 connects the printer 33. The device interface 773 outputs print data on a receipt sheet to the printer 33.

The device interface 774 connects the scanner 324. The device interface 774 receives data of a machine-readable code such as a barcode or a two-dimensional code read by the scanner 34.

The device interface 775 connects the hand scanner 325. The device interface 774 receives data of a machine-readable code such as a barcode or a two-dimensional code read by the hand scanner 325.

The output port 78 connects the patrol lamp 37 and the speaker 38. The output port 78 outputs an alert signal or the like to the patrol lamp 37 and the speaker 38.

The self-POS terminal 30 having such a configuration uses a part of the volatile memory area of the main memory 72 as an area of the transaction file 721. The transaction file 721 is a data file for storing data related to one transaction processed by the self-POS terminal 30.

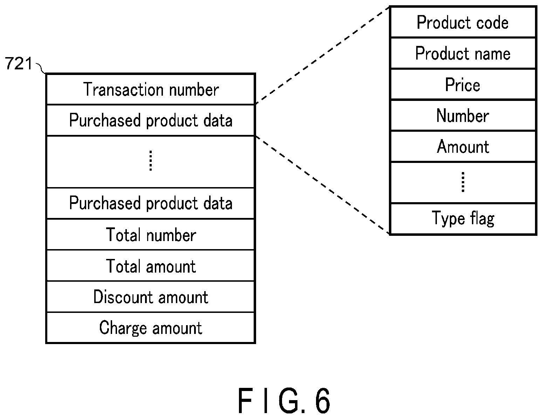

FIG. 6 is a schematic diagram illustrating a main data structure stored in the transaction file 721. As illustrated in the drawing, the transaction file 721 stores data such as a transaction number, purchased product data, a total number, a total amount, a discount amount, and a charge amount. The transaction number is a series of numbers issued each time a transaction is started in the self-POS terminal 30.

The purchased product data is data created for each purchased product sold and bought in a commercial transaction identified by the transaction number. The purchased product data includes items such as a product code, a product name, a price, a number, an amount, and a type flag. The number is the purchase number of the products identified by the product code. The amount corresponds to the amount of the purchased products. The type flag is 1-bit data for identifying whether it is the purchased product data of the product registered by the self-POS terminal 30 or the purchased product data of the product registered by the information terminal 10. In the present embodiment, the type flag indicating the purchased product data of the product registered by the self-POS terminal 30 is set to "0", and the type flag indicating the purchased product data of the product registered by the information terminal 10 is set to "1".

The transaction file 721 may store a plurality of purchased product data. Specifically, the transaction file 721 can store the purchased product data of the product registered by the self-POS terminal 30 and the purchased product data of the product registered by the information terminal 10 as the purchased product data for one transaction. Such data storage may occur in a case of a commercial transaction in which a product registered by the self-POS terminal 30 is added to a product registered by the information terminal 10. Of course, the transaction file 721 can store only the purchased product data of the product registered by the self-POS terminal 30 or store only the purchased product data of the product registered by the information terminal 10. The former event may occur when a commercial transaction of only a product registered by the self-POS terminal 30 is settled. The latter event may occur when a commercial transaction of only a product registered by the information terminal 10 is settled.

The total number is a number obtained by adding the numbers of the purchased product data. The total amount is an amount obtained by adding the amounts of the purchased product data. The discount amount is an amount obtained by discounting the total amount. The charge amount is an amount obtained by subtracting the discount amount from the total amount.

The description returns to FIG. 5.

The self-POS terminal 30 implements the checkout program 731 such that the processor 71 has functions as a first acquisition unit 711, a second acquisition unit 712, a reception unit 713, an invalidation unit 714, a notification unit 715, a checkout unit 716, and a control unit 717. The checkout program 731 is installed in the auxiliary storage device 73. The checkout program 731 may be installed in the main memory 72. A method for installing the checkout program 731 in the main memory 72 or the auxiliary storage device 73 is not particularly limited. The checkout program 731 can be installed in the main memory 72 or the auxiliary storage device 73 by recording the checkout program in a removable recording medium or distributing the checkout program 731 by communication via a network. The form of the recording medium is not limited as long as the recording medium can store a program such as an SD memory card or a USB memory and can be read by a device.

The first acquisition unit 711 is a function of acquiring information on a product purchased by a customer based on data input by the customer's operation on an input device such as the scanner 34, the hand scanner 35, or the touch panel 31. The second acquisition unit 712 is a function of acquiring, from the terminal controller 20, information on a product to be purchased by a customer stored in the shopping file 21 based on data input by the customer's operation on the information terminal 10. The reception unit 713 is a function of receiving identification information for identifying the information on the product stored in the shopping file 21 of the terminal controller 20. The checkout code displayed on the touch panel 14 of the information terminal 10 corresponds to the identification information. The second acquisition unit 712 acquires, from the terminal controller 20, the information on the product identified by the identification information received by the reception unit 713.

The invalidation unit 714 is a function of invalidating a customer's operation on the input device while the second acquisition unit 712 acquires product information from the terminal controller 20. The notification unit 715 is a function of providing notification that the second acquisition unit 712 has acquired the information on the product from the terminal controller 20.

The checkout unit 716 is a function of settling a commercial transaction based on the information on the product acquired by the first acquisition unit 711 and the second acquisition unit 712. The control unit 717 is a function of changing the image displayed on the touch panel 31 when the checkout by the checkout unit 716 is completed between the case where the second acquisition unit 712 has acquired the information on the product from the terminal controller 20 and the case where the second acquisition unit 712 has not acquired the information on the product from the terminal controller 20.

The details of the functions of the first acquisition unit 711, the second acquisition unit 712, the reception unit 713, the invalidation unit 714, the notification unit 715, the checkout unit 716, and the control unit 717 described above will be clarified in the description of the operation of the self-checkout system 100.

### (Description of Operation of Self-Checkout System)

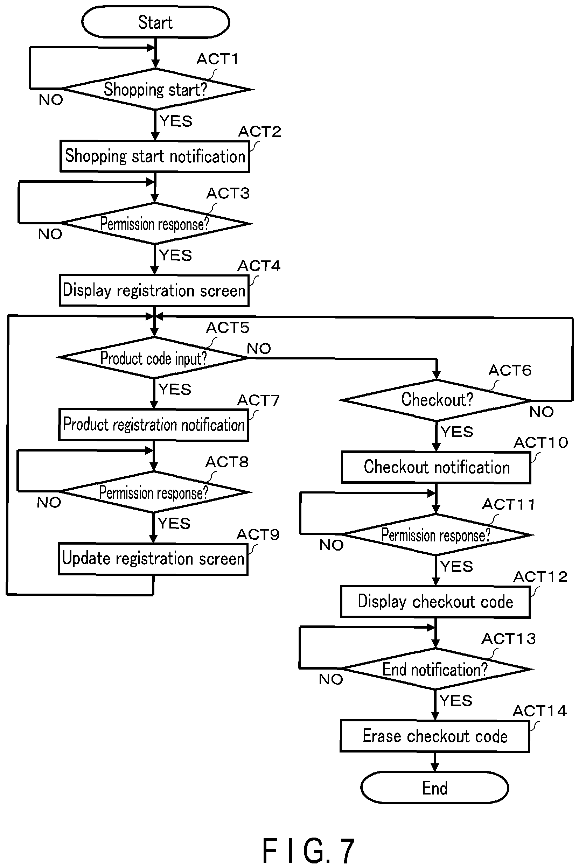

First, the operation of the self-checkout system 100 when a customer self-registers information on a purchased product using the information terminal 10 in a sales room will be described with reference to flowcharts in FIGS. 7 to 10.

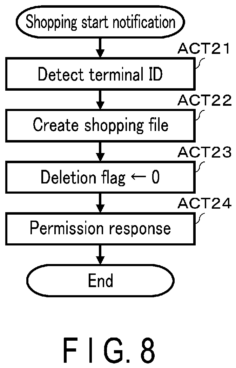

FIG. 7 is a flowchart illustrating the main procedure of information processing executed by the processor 11 of the information terminal 10 according to the self-registration program 131. FIGS. 8 to 10 are flowcharts illustrating the main procedures of information processing executed by the terminal controller 20 in response to the information processing executed by the information terminal 10. Note that the procedure and content of the information processing described below are an example. The procedure and content are not particularly limited as long as similar results can be obtained.

When the self-registration program 131 is activated, the processor 11 of the information terminal 10 starts the information processing of the procedure illustrated in the flowchart in FIG. 7. The processor 11 waits for an instruction to start shopping as ACT 1. For example, on the touch panel 14 of the information terminal 10 activated by the self-registration program 131, a shopping start button is displayed as a display element. A customer who self-registers a purchased product using the information terminal 10 first touches the shopping start button.

When detecting that the shopping start button is touched, the processor 11 determines that the shopping start is instructed. The processor 11 proceeds from ACT 1 to ACT 2. The processor 11 controls the wireless unit 16 to output a shopping start notification command to the terminal controller 20 as ACT 2. By this control, the shopping start notification command is transmitted from the wireless unit 16. The shopping start notification command is received by the access point 61 and transmitted to the terminal controller 20 via the communication network 60. The shopping start notification command includes a terminal ID of the information terminal 10.

FIG. 8 is a flowchart illustrating a main procedure of shopping start notification command reception processing executed by the terminal controller 20. Upon receiving the shopping start notification command, the terminal controller 20 detects the terminal ID from the shopping start notification command as ACT 21. The terminal controller 20 creates the shopping file 21 including the terminal ID in the storage unit as ACT 22. As ACT 23, the terminal controller 20 sets the deletion flag of the shopping file 21 to a value "0" indicating a non-deletion state. Thereafter, the terminal controller 20 transmits a permission response command to the information terminal 10 which is a shopping start notification command transmission source as ACT 24. Thus, the terminal controller 20 ends the reception processing of the shopping start notification command.

The permission response command includes the terminal ID included in the shopping start notification command. The permission response command is wirelessly transmitted via the access point 61 of the communication network 60. The permission response command is received by the information terminal 10 to which the terminal ID included in the command is set.

The description returns to FIG. 7.

The information terminal 10 that has transmitted the shopping start notification command waits for the permission response command as ACT 3. Upon receiving the permission response command via the wireless unit 16, the processor 11 proceeds from ACT 3 to ACT 4. The processor 11 sets the screen of the touch panel 14 as a registration screen as ACT 4. The registration screen is a screen including an area for displaying a product name, price, and number and the like of a product registered by the information terminal 10 in a list format.

The processor 11 of the information terminal 10 that has displayed the registration screen waits for a product code to be input as ACT 5 or a checkout instruction to be issued as ACT 6. For example, when a barcode of a product is photographed by the camera 15 and a product code is detected from the barcode, the processor 11 recognizes that the product code has been input. The processor 11 proceeds from ACT 5 to ACT 7. The processor 11 controls the wireless unit 16 to output the product registration notification command to the terminal controller 20 as ACT 7. By this control, a product registration notification command is transmitted from the wireless unit 16. The product registration notification command is received by the access point 61 and transmitted to the terminal controller 20 via the communication network 60. The product registration notification command includes the terminal ID of the information terminal 10 and the input product code.

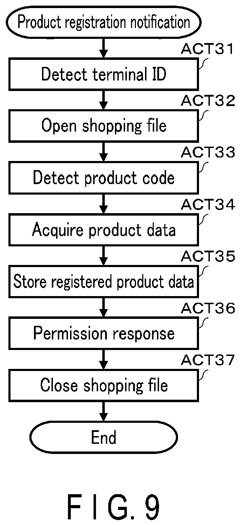

FIG. 9 is a flowchart illustrating the main procedure of the product registration notification command reception processing executed by the terminal controller 20. Upon receiving the product registration notification command, the terminal controller 20 detects the terminal ID from the product registration notification command as ACT 31. The terminal controller 20 opens the shopping file 21 storing the terminal ID as ACT 32.

The terminal controller 20 detects the product code from the product registration notification command as ACT 33. The terminal controller 20 accesses the store server 50 via the communication network 60 as ACT 34, and acquires product data such as a product name and a price from a product record including the product code. The terminal controller 20 that has acquired the product data creates registered product data from the product code, the product name, the price, the number, and the amount and the like as ACT 35, and stores the data in the shopping file 21 in the open state.

Thereafter, the terminal controller 20 transmits a permission response command to the information terminal 10 that is a product registration notification command transmission source as ACT 36. The terminal controller 20 closes the shopping file 21 in the open state as ACT 37. Thus, the terminal controller 20 ends the reception processing of the product registration notification command.

The permission response command includes the terminal ID included in the product registration notification command. The permission response command also includes the product name, price, and number and the like of the registered product data. The permission response command is wirelessly transmitted via the access point 61 of the communication network 60. The permission response command is received by the information terminal 10 to which the terminal ID included in the command is set.

The description returns to FIG. 7.

The processor 11 of the information terminal 10 that has transmitted the product registration notification command waits for the permission response command as ACT 8. Upon receiving the permission response command via the wireless unit 16, the processor 11 proceeds from ACT 8 to ACT 9. The processor 11 updates the registration screen so that the product name, the price, the number, and the like included in the permission response command are displayed as ACT 9. Thereafter, the processor 11 returns to the standby state of ACT 5 and ACT 6.

When the next product code is input in the standby state of ACT 5 and ACT 6, the processor 11 executes the processing of ACT 7 to ACT 9 in the same manner as described above. The terminal controller 20 executes the reception processing of the product registration notification command in the same manner as described above. As a result, registered product data of a product whose barcode is photographed by the camera 15 is newly stored in the shopping file 21 including the terminal ID of the information terminal 10.

In this manner, the customer holds the barcode of the purchased product over the camera of the information terminal 10 and causes the camera 15 to read the barcode, thereby self-registering the purchased product. The customer who has completed the registration of the purchased product touches a checkout button displayed on the touch panel 14 of the information terminal 10.

When the processor 11 detects that the checkout button has been touched in the standby state of ACT 5 and ACT 6, the processor 11 recognizes that checkout has been instructed. The processor 11 proceeds from ACT 6 to ACT 10. The processor 11 controls the wireless unit 16 to output the checkout notification command to the terminal controller 20 as ACT 10. By this control, the checkout notification command is transmitted from the wireless unit 16. The checkout notification command is received at the access point 61 and transmitted to the terminal controller 20 via the communication network 60. The checkout notification command includes the terminal ID of the information terminal 10.

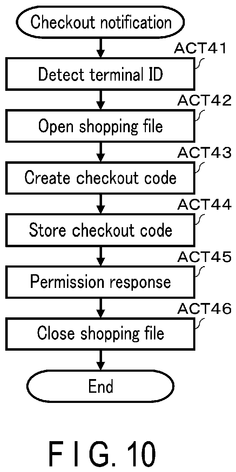

FIG. 10 is a flowchart illustrating a main procedure of checkout notification command reception processing executed by the terminal controller 20. Upon receiving the checkout notification command, the terminal controller 20 detects the terminal ID from the checkout notification command as ACT 41. The terminal controller 20 opens the shopping file 21 storing the terminal ID as ACT 42.

The terminal controller 20 creates a checkout code as ACT 43. For example, the terminal controller 20 creates a unique checkout code by combining the terminal ID and the current date. The terminal controller 20 having created the checkout code stores the checkout code in the shopping file 21 in the open state as ACT 44. The terminal controller 20 transmits a permission response command to the information terminal 10 that is the checkout notification command transmission source as ACT 45. Furthermore, the terminal controller 20 closes the shopping file 21 in the open state as ACT 46. Thus, the terminal controller 20 ends the reception processing of the checkout notification command.

The permission response command includes the terminal ID included in the checkout notification command. The permission response command also includes the checkout code created in ACT 44. The permission response command is wirelessly transmitted via the access point 61 of the communication network 60. The permission response command is received by the information terminal 10 to which the terminal ID included in the command is set.

The description returns to FIG. 7.

The processor 11 of the information terminal 10 that has transmitted the checkout notification command waits for a permission response as ACT 11. Upon receiving the permission response command via the wireless unit 16, the processor 11 proceeds from ACT 11 to ACT 12. The processor 11 acquires a checkout code from the permission response command as ACT 12, and displays a barcode corresponding to the checkout code on the touch panel 14.

Thereafter, the processor 11 waits for a completion notification command as ACT 13. The completion notification command is a command received from the terminal controller 20 when the checkout of the purchased product specified by the registered product data stored in the shopping file 21 in which the terminal ID of the information terminal 10 is set is completed. Upon receiving the completion notification command via the wireless unit 16, the processor 11 proceeds from ACT 13 to ACT 14. The processor 11 erases the barcode of the checkout code displayed on the touch panel 14 as ACT 14. As described above, the processor 11 ends the information processing according to the self-registration program.

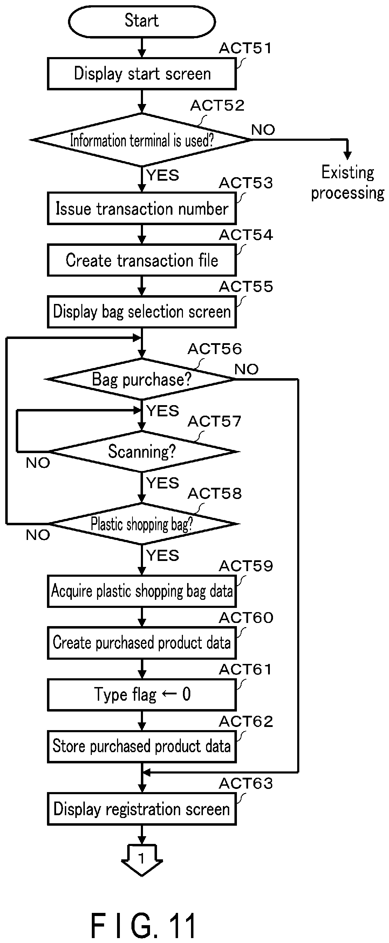

Then, the customer who has finished shopping in the sales room and has touched the checkout button of the information terminal 10 moves to the checkout room where the self-POS terminal 30 is installed. The customer operates the self-POS terminal 30 to pay for the purchased product. At this time, a barcode corresponding to a checkout code is displayed on the touch panel 14 of the information terminal 10. Meanwhile, the customer does not necessarily use the information terminal 10. When a customer who does not use the information terminal 10 finishes shopping without self-registering a purchased product in the sales room, the customer moves to the checkout room. The customer operates the self-POS terminal 30 to perform self-registration of the purchased product and self-checkout for the charge. Therefore, next, the operation of the self-checkout system 100 when a customer operates the self-POS terminal 30 to pay for a purchased product will be described with reference to FIGS. 11 to 23.

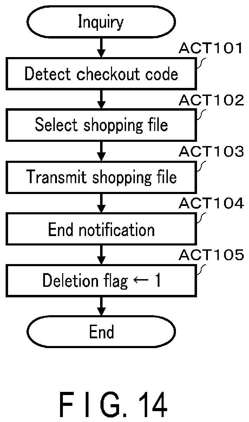

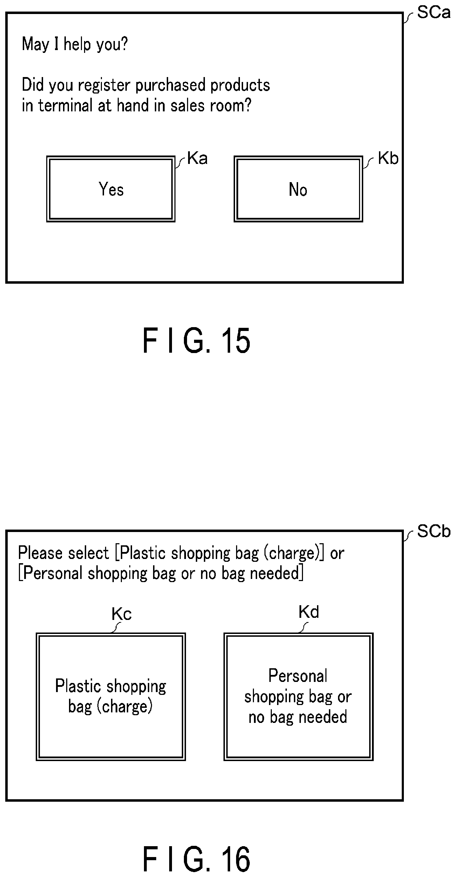

FIGS. 11 to 13 are flowcharts illustrating main procedures of information processing executed by the processor 71 of the self-POS terminal 30 according to the checkout program 731. FIG. 14 is a flowchart illustrating a main procedure of information processing executed by the terminal controller 20 in response to the information processing executed by the self-POS terminal 30. FIGS. 15 to 22 are schematic diagrams illustrating various screens displayed on the touch panel 31 of the self-POS terminal 30. Note that the procedure and content of the information processing described below are an example. The procedure and content are not particularly limited as long as similar results can be obtained. The screens illustrated in FIGS. 15 to 22 are also examples. The information to be displayed and the layout thereof can be appropriately changed.

As illustrated in FIG. 11, the processor 71 of the self-POS terminal 30 sets the screen of the touch panel 31 as a start screen SCa (see FIG. 15) as ACT 51. The processor 71 determines whether or not the customer uses the information terminal 10 as ACT 52.

FIG. 15 is a display example of the start screen SCa. As illustrated in the drawing, on the start screen SCa, an image of a first softkey Ka in which a text of [Yes] is described and an image of a second softkey Kb in which a text of [No] is described are displayed together with a text inquiring whether or not the purchased products are registered using the information terminal 10 in the sales room. The customer who self-registers the purchased products using the information terminal 10 in the sales room performs a touch operation on the first softkey Ka. The customer who has finished shopping in the sales room without using the information terminal 10 performs a touch operation on the second softkey Kb.

The processor 71 that detects the touch operation on the second softkey Kb by the signal from the touch panel 31 determines that the customer is not using the information terminal 10. The processor 71 proceeds from ACT 52 to the existing processing. The existing processing is processing in which a customer operates the self-POS terminal 30 to perform self-registration of a purchased product and self-checkout for the charge. Since this processing is well known, the description thereof will be omitted here.

The processor 71 that detects the touch operation on the first softkey Ka by the signal from the touch panel 31 determines that the customer is using the information terminal 10. The processor 71 proceeds from ACT 52 to ACT 53. The processor 71 issues a new transaction number as ACT 53. The processor 71 creates a transaction file 721 as ACT 54 and stores a new transaction number in the transaction file 721. Thereafter, the processor 71 sets the screen of the touch panel 31 as a bag selection screen SCb (see FIG. 16) as ACT 55. The processor 71 waits to see whether or not a plastic shopping bag is selected as ACT 56.

FIG. 16 is a display example of the bag selection screen SCb. As illustrated in the drawing, on the bag selection screen SCb, together with an image of a third softkey Kc in which a text of [Plastic shopping bag] is described and an image of a fourth softkey Kd in which a text of [Personal shopping bag or bag is unnecessary] is described, a text of a content instructing the customer to operate the third softkey Kc or the fourth softkey Kd is displayed.

The customer who has checked the bag selection screen SCb determines whether or not to purchase a plastic shopping bag. The customer who purchases the plastic shopping bag performs a touch operation on the third softkey Kc, and holds the barcode of the plastic shopping bag prepared in the checkout room over the reading window of the scanner 34. Alternatively, the customer brings the hand scanner 35 close to the barcode of the plastic shopping bag. The barcode of the plastic shopping bag is a barcode representing a unique identification code set for the plastic shopping bag.

The processor 71 that has detected the touch operation on the third softkey Kc by the signal from the touch panel 31 determines that the plastic shopping bag has been selected. The processor 71 proceeds from ACT 56 to ACT 57. The processor 71 waits for the scanning of the machine readable code by the scanner 34 or the hand scanner 35 as ACT 57. When the scanning has been performed, the processor 71 proceeds from ACT 57 to ACT 58. The processor 71 checks whether the machine-readable code scanned as ACT 58 is the barcode of the plastic shopping bag. When the machine readable code is other than the barcode of the plastic shopping bag, the processor 71 returns from ACT 58 to ACT 56. The processor 71 waits to see again whether the plastic shopping bag is selected.

When the machine-readable code scanned by the scanner 34 or the hand scanner 35 is the barcode of the plastic shopping bag, the processor 71 proceeds from ACT 58 to ACT 59. As ACT 59, the processor 71 accesses the store server 50 via the communication network 60, and acquires plastic shopping bag data including the identification code, name, and price of the plastic shopping bag. Like the product data, the plastic shopping bag data is also stored in the product database 51. The plastic shopping bag data may be stored in a storage unit other than the product database 51.

The processor 71 that has acquired the plastic shopping bag data creates the purchased product data with the identification code, name, price, number, and amount and the like of the plastic shopping bag as ACT 60. At this time, the processor 71 sets the type flag of the purchased product data to "0" as ACT 61. Thereafter, the processor 71 stores the purchased product data with the type flag of "0" in the transaction file 721 as ACT 62.

Meanwhile, a customer who does not purchase a plastic shopping bag performs a touch operation on the fourth softkey Kd on the bag selection screen SCb. The processor 71 that has detected the touch operation on the fourth softkey Kd by the signal from the touch panel 31 determines that no plastic shopping bag has been selected. The processor 71 skips the processing of ACT 57 to ACT 62 described above.

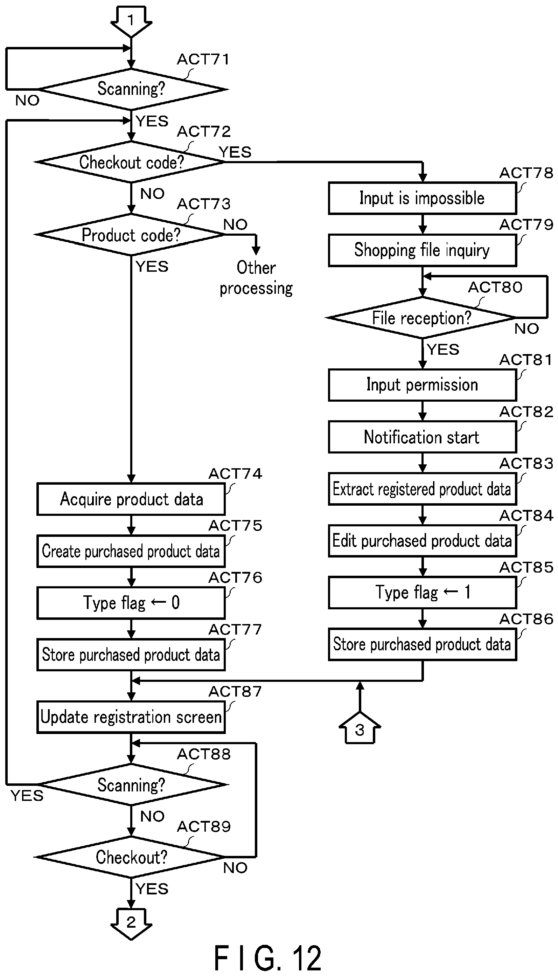

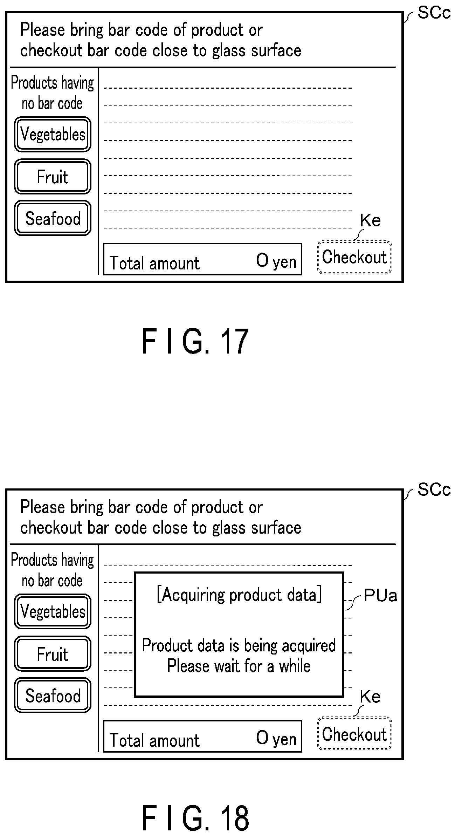

The processor 71 that has executed or skipped the processing of ACT 57 to ACT 62 proceeds to ACT 63. The processor 71 sets the screen of the touch panel 31 as a registration screen SCc (see FIG. 17) as ACT 63. The processor 71 waits for scanning by the scanner 34 or the hand scanner 35 as ACT 71 in FIG. 12.

FIG. 17 is a display example of the registration screen SCc. As illustrated in the drawing, an area for displaying a list and a total amount of purchased products is formed on the registration screen SCc. An image of a fifth softkey Ke in which a text of [checkout] is described is displayed. However, at the present time when the purchased product is not registered, the fifth softkey Ke is grayed out and the input is invalid. Furthermore, as an example of the product group having no barcode, an image of a softkey for selecting "VEGETABLE", "FRUIT", and "SEAFOOD" is also displayed. For example, since a list of vegetables to which no barcode is attached is displayed on the touch panel 31 by selecting the "VEGETABLE" softkey, it is well known that products having no barcode can be registered from the list, and it goes without saying.

A customer checks whether there is a purchased product that has not been registered on the information terminal 10. A customer who does not have an unregistered purchased product scans a barcode of a checkout code displayed on the touch panel 14 of the information terminal 10 with the scanner 34 or the hand scanner 35. A customer having an unregistered purchased product scans the barcode of the unregistered purchased product, and then scans the barcode of the checkout code. The customer may scan the barcode of the checkout code first and then scan the barcode of the unregistered purchased product.

In the standby state of ACT 71, when scanning by the scanner 34 or the hand scanner 35 is detected, the processor 71 proceeds from ACT 71 to ACT 72. The processor 71 checks whether the machine-readable code scanned is the barcode of the checkout code. When the machine-readable code is not the barcode of the checkout code, the processor 71 checks whether the machine-readable code scanned as ACT 73 is the barcode of the product code. When the machine-readable code is not the bar code of the product code, the processor 71 executes other processing. The other processing is not the point of the present embodiment, and thus the description thereof is omitted.

When the barcode of the product code is scanned, the processor 71 proceeds from ACT 73 to ACT 74. The processor 71 accesses the store server 50 via the communication network 60 as ACT 74, and acquires product data such as a product name and a price from a product record including the product code. The processor 71 creates the purchased product data with a product code, a product name, a price, a number, and an amount and the like as ACT 75. At this time, the processor 71 sets the type flag of the purchased product data to "0" as ACT 76. Thereafter, the processor 71 stores the purchased product data with the type flag of "0" in the transaction file 721 as ACT 77. Here, the processor 71 realizes a function as the first acquisition unit 711 by the processing of ACT 73 to ACT 77.

Meanwhile, when the barcode of the checkout code is scanned, the processor 71 proceeds from ACT 72 to ACT 78. The processor 71 does not accept a customer's operation on an input device as ACT 78. Specifically, the processor 71 grays out all the softkeys of the touch panel 31 to invalidate them. The processor 71 invalidates all the data signals from the scanner 34 and the hand scanner 35.

The processor 71 controls the communication interface 75 to transmit an inquiry command of the shopping file 21 as ACT 79. By this control, the inquiry command of the shopping file 21 is transmitted via the communication interface 75. The inquiry command is transmitted to the terminal controller 20 via the communication network 60. The inquiry command includes an checkout code. At this time, as illustrated in FIG. 18, the processor 71 displays a pop-up image PUa for notifying the customer that the product data is being acquired so as to be superimposed on the registration screen SCc.

Upon receiving the inquiry command, the terminal controller 20 starts the reception processing of the procedure illustrated in FIG. 14. The terminal controller 20 detects the checkout code from the inquiry command as ACT 101. The terminal controller 20 selects the shopping file 21 including the checkout code as ACT 102.

The terminal controller 20 that has selected the shopping file 21 transmits the data of the shopping file 21 to the self-POS terminal 30 that is the inquiry command transmission source as ACT 103. The terminal controller 20 wirelessly transmits, as ACT 104, a completion notification command including the terminal ID stored in the shopping file 21 from the access point 61. Furthermore, as ACT 105, the terminal controller 20 rewrites the deletion flag of the shopping file 21 to a value "1" indicating the deletion state. As described above, the terminal controller 20 ends the reception processing of the inquiry command from the self-POS terminal 30.

Incidentally, the information terminal 10 to which the terminal ID included in the completion notification command is set is the information terminal 10 in which the barcode representing the checkout code is read by the scanner 34 or the hand scanner 35 of the self-POS terminal 30. In the information terminal 10, the processor 11 executes the processing of ACT 14 in FIG. 7 as described above. That is, the processor 11 erases the barcode representing the checkout code in response to the reception of the selection completion notification command.

The description returns to FIG. 12.

The processor 71 of the self-POS terminal 30 that has transmitted the inquiry command of the shopping file 21 waits to receive the data of the shopping file 21 as ACT 80. Upon receiving the data of the shopping file 21 via the communication interface 75, the processor 71 proceeds from ACT 80 to ACT 81. The processor 71 accepts a customer's operation on an input device as ACT 81. Specifically, the processor 71 enables all the softkeys of the touch panel 31. The processor 71 enables all the data signals from the scanner 34 and the hand scanner 35. At this time, the processor 71 erases the pop-up image PUa. Here, the processor 71 realizes a function as the invalidation unit 714 by the processing of ACT 78 to ACT 81.

As ACT 82, the processor 71 starts a notification operation for reporting that the customer is a customer who has registered a purchased product using the information terminal 10. Specifically, the processor 71 lights the patrol lamp 37 in a predetermined light emitting color. Here, the processor 71 realizes a function as the notification unit 715 by the processing of ACT 82.

The processor 71 extracts all the registered product data from the data of the shopping file 21 as ACT 83. The processor 71 adds a type flag to the registered product data extracted as ACT 84 to obtain purchased product data. At this time, the processor 71 sets the type flag to "1" as ACT 85. Thereafter, the processor 71 stores all the purchased product data with the type flag set to "1" in the transaction file 721 as ACT 86. Here, the processor 71 realizes the function as the second acquisition unit 712 by the processing of ACT 79, ACT 80, and ACT 83 to ACT 86.

When the purchased product data with the type flag of "0" is stored in the transaction file 721 in ACT 77 or the purchased product data with the type flag of "1" is stored in the transaction file 721 in ACT 86, the processor 71 proceeds to ACT 87. The processor 71 updates the purchased product list and the total amount on the registration screen SCc based on the data stored in the transaction file 721 as ACT 87. The processor 71 enables the fifth softkey Ke of the registration screen SCc.

Thereafter, the processor 71 waits for further scanning to be performed as ACT 88 or the fifth softkey Ke to be input as ACT 89. When the scanner 34 or the hand scanner 35 scans the machine-readable code in the standby state of ACT 88 and ACT 89, the processor 71 returns from ACT 88 to CT72. That is, the processor 71 identifies whether the checkout code is scanned or the product code is scanned. When the product code is scanned, the processor 71 executes the processing of ACT 74 to ACT 77 and ACT 87 in the same manner as described above. When the checkout code is scanned, the processor 71 executes the processing of ACT 78 to ACT 86 and ACT 87 in the same manner as described above. Therefore, the product code may be scanned before the scanning of the checkout code, or the checkout code may be scanned after the scanning of the checkout code.

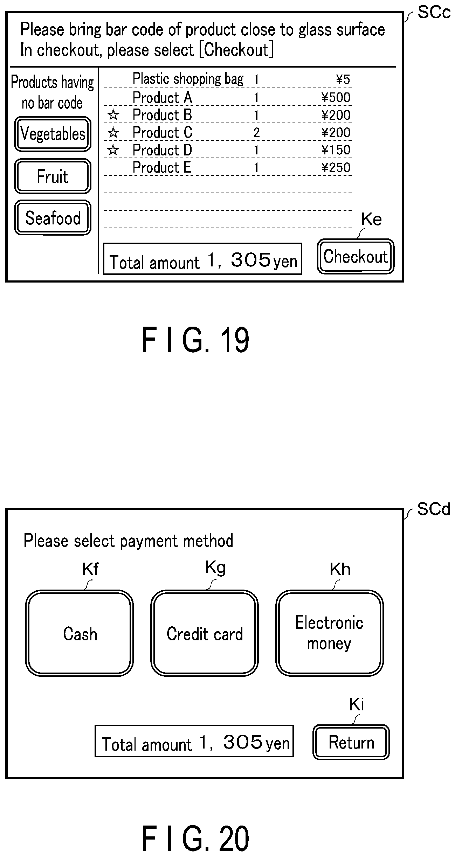

FIG. 19 is an example of the registration screen SCc in which the purchased product list and the total amount are updated. The registration screen SCc is an example in which the plastic shopping bag and the purchased product data of five products are stored in the transaction file 721: the product A, the product B, the product C, the product D, and the product E. Here, the purchased product data of the product A is purchased product data stored in the transaction file 721 by the scanning of the product code before the checkout code is scanned, that is, purchased product data of which the type flag is "0". Meanwhile, the purchased product data of the product B, the product C, and the product D is purchased product data based on the registered product data of the shopping file 41 transferred from the terminal controller 20 in response to the scanning of the checkout code, that is, purchased product data with the type flag of "1". The purchased product data of the product E is purchased product data stored in the transaction file 721 by the scanning of the product code after the scanning of the checkout code, that is, purchased product data of which the type flag is "0".

As illustrated in FIG. 19, for example, a star mark is displayed in the registration description information on the product name, the price, the number, and the amount corresponding to the purchased product data with the type flag "1". Meanwhile, a mark is not displayed in the registration description information on the product name, the price, the number, and the amount corresponding to the purchased product data with the type flag "0". As described above, on the registration screen SCc, the registration description information corresponding to the purchased product data with the type flag "1" and the registration description information corresponding to the purchased product data with the type flag "0" can be identified by the presence or absence of a mark.

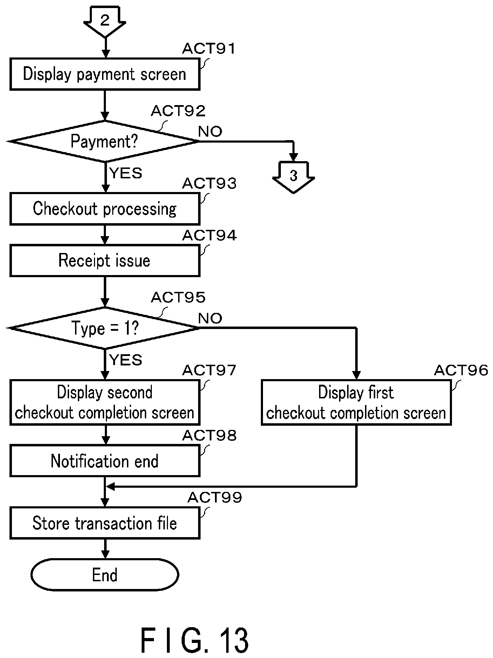

In the standby state of ACT 88 and ACT 89, when detecting that the touch operation is performed on the fifth softkey Ke by the signal from the touch panel 31, the processor 71 proceeds to ACT 91 in FIG. 13. As ACT 91, the processor 71 sets the screen of the touch panel 31 as a payment screen SCd (see FIG. 20). The processor 71 waits for an instruction of payment of the charge as ACT 92.

FIG. 20 is a display example of the payment screen SCd. As illustrated in the drawing, on the payment screen SCd, an image of a sixth softkey Kf describing a text of [Cash], an image of a seventh softkey Kg describing a text of [Credit card], an image of an eighth softkey Kh describing a text of [Electronic money], and an image of a ninth softkey Ki describing a text of [Return] are displayed together with the total amount. A customer who pays the amount corresponding to the total amount in cash performs a touch operation on the sixth softkey Kf. A customer who pays with a credit card performs a touch operation on the seventh softkey Kg. A customer who pays with electronic money performs a touch operation on the eighth softkey Kh. A customer temporarily suspending payment performs a touch operation on the ninth softkey Ki.

When detecting that a touch operation is performed on the ninth softkey Ki by the signal from the touch panel 31, the processor 71 returns from ACT 92 to ACT 87 in FIG. 12. The processor 71 returns the screen of the touch panel 31 to the last-minute registration screen SCc. Thereafter, the processor 71 executes the processing after ACT 87 in the same manner as described above.

When the processor 71 detects that a touch operation is performed on any of the sixth to eighth softkeys instead of the ninth softkey Ki, the processor 71 proceeds from ACT 92 to ACT 93. The processor 71 executes checkout processing as ACT 93. That is, when the touch operation is performed on the sixth softkey Kf, the processor 71 controls the automatic change machine 36 to execute the checkout processing of the cash transaction. When the touch operation is performed on the seventh softkey Kg, the processor 71 controls the card reader 32 to execute the checkout processing of the credit card transaction. When the touch operation is performed on the eighth softkey Kh, the processor 71 controls the card reader 32 or the hand scanner 35 to execute the checkout processing of the electronic money transaction. Since the checkout processing of the cash transaction, the credit card transaction, and the electronic money transaction is well-known processing, the description thereof will be omitted here. Here, the processor 71 realizes a function as the checkout unit 716 by the processing of ACT 91 to ACT 93.

The processor 71 that has completed the checkout processing proceeds to ACT 94. The processor 71 creates print data of a receipt based on the data stored in the transaction file 721 as ACT 94, outputs the print data to the printer 33, and causes the printer 33 to issue the receipt. Note that the receipt may be issued as an electronic receipt instead of a paper receipt. Also in this receipt, the registration description information corresponding to the purchased product data with the type flag "1" and the registration description information corresponding to the purchased product data with the type flag "0" may be identifiable by the presence or absence of a mark or the like.

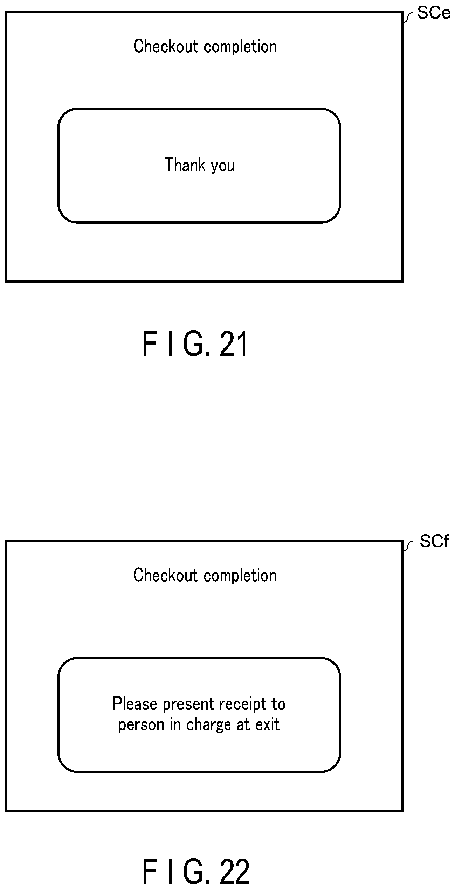

The processor 71 that has controlled issuance of the receipt proceeds to ACT 95. As ACT 95, the processor 71 checks whether or not purchased product data with the type flag of "1" is present in the transaction file 721. When no purchased product data with the type flag "1" is present, the processor 71 proceeds from ACT 95 to ACT 96. As ACT 96, the processor 71 sets the screen of the touch panel 31 as a first checkout completion screen SCe (see FIG. 21).

Meanwhile, when the purchased product data with the type flag "1" is present, the processor 71 proceeds from ACT 95 to ACT 97. As ACT 97, the processor 71 sets the screen of the touch panel 31 as a second checkout completion screen SCf (see FIG. 22). The processor 71 ends the notification operation described above as ACT 98. Accordingly, the patrol lamp 37 is turned off. Alternatively, the patrol lamp 37 emits light in a color other than the predetermined color.

FIG. 21 is a display example of the first checkout completion screen SCe, and FIG. 22 is a display example of the second checkout completion screen SCf. As illustrated in FIGS. 21 and 22, text reporting that the checkout is completed is displayed on both the first checkout completion screen SCe and the second checkout completion screen SCf. Furthermore, on the second checkout completion screen SCf, text instructing to present a receipt to a person in charge at the exit is displayed.

The first checkout completion screen SCe is displayed when the purchased product data with the type flag of "1" is not present in the transaction file 721. That is, the first checkout completion screen SCe is displayed to the customer who has self-registered all the purchased products using the self-POS terminal 30. Therefore, a customer who has finished shopping without using the information terminal 10 may leave the store as it is after confirming the first checkout completion screen SCe.

Meanwhile, the second checkout completion screen SCf is displayed when the purchased product data with the type flag of "1" is present in the transaction file 721. That is, the second checkout completion screen SCf is displayed for the customer who self-registers the purchased products using the information terminal 10 in the sales room. Therefore, a customer who has performed self-registration using the information terminal 10 presents a receipt to a person in charge at the exit, for example, an attendant, and receives the check of a purchased product.

Here, the processor 71 realizes a function as the control unit 717 by the processing of ACT 95 to ACT 97.

The processor 71 that has displayed the first checkout completion screen SCe or the second checkout completion screen SCf proceeds to ACT 99. The processor 71 stores the transaction file 721 in the auxiliary storage device 73 as ACT 99. As described above, the processor 71 ends the information processing after the first softkey Ka on the start screen SCa is operated.

### (Description of Action of Self-Checkout System)

As described above in detail, the self-POS terminal 30 of the self-checkout system 100 can be used not only as a conventional full-self-supporting checkout device but also as a checkout device for a self-registration system using the information terminal 10. Therefore, it is not necessary to separately install the checkout device for the self-registration system in the checkout room where the self-POS terminal 30 is installed. Therefore, it is not necessary to expand the checkout room. The maintenance cost of the checkout device does not increase.

Moreover, the self-POS terminal 30 can perform checkout as one commercial transaction including not only the purchased product self-registered using the information terminal 10 but also the purchased product registered using the self-POS terminal 30. Therefore, a customer who has self-registered a purchased product using the information terminal 10 in the sales room can also add and settle an unregistered purchased product with the self-POS terminal 30 in the information terminal 10 at the time of checkout in the checkout room.

In the meantime, the processor 71 of the self-POS terminal 30 scans the checkout code displayed on the touch panel 14 of the information terminal 10 and enters the standby state of ACT 72 and ACT 73 even after completing the processing of ACT 78 to ACT 87 in FIG. 12. For example, when the checkout code displayed on the touch panel 14 of another information terminal 10 is scanned, the processor 71 executes the processing of ACT 78 to ACT 87 again. Therefore, the self-POS terminal 30 can collectively settle the purchased products registered in each of the two or more information terminals 10 as one commercial transaction. Such a function is effective when, for example, family members collectively settle purchased products registered in a sales room using the information terminal 10 in a checkout room.

The processor 71 of the self-POS terminal 30 does not receive an input from each of the input devices of the touch panel 31, the scanner 34, and the hand scanner 35 while acquiring, from the terminal controller 20, the information on the purchased products self-registered by the customer using the information terminal 10 by the processing of ACT 78 and ACT 81 in FIG. 12. If there is an input while the information on the purchased products is being acquired from the terminal controller 20, there is a concern that an error will occur and the acquisition of data will be interrupted. However, since the self-POS terminal 30 does not receive an input from the input device during data acquisition, such a concern does not occur.

When the processor 71 of the self-POS terminal 30 acquires, from the terminal controller 20, the information on the purchased products self-registered by the customer using the information terminal 10 by the processing of ACT 82 in FIG. 12, a notification is given in a state where the light emitting color of the patrol lamp 37 is replaced by a predetermined color. As described as the processing of ACT 98 in FIG. 13, this notification operation is continued until checkout is completed. Therefore, a person in charge such as an attendant needs to check a receipt of a customer who has self-registered a purchased product by using the information terminal 10, but it is only required to check a receipt of a customer who has completed checkout at the self-POS terminal 30 reported by the patrol card, so that the checking work is simplified. In addition, a second checkout completion screen is displayed to a customer who uses the information terminal 10. On the second cashier completion screen, a text instructing to present the receipt to the person in charge at the exit is displayed. Therefore, it is possible to strongly make the customer aware that the receipt is confirmed at the time of leaving the store.

Meanwhile, the transaction file 721 stored in the auxiliary storage device 73 in the processing of ACT 99 in FIG. 13 can be collected and analyzed by the store server 50. From this analysis, for example, by obtaining a ratio between the purchased product data with the type flag "0" and the purchased product data with the type flag "1", it is possible to know a rough ratio between customers who use the information terminal 10 and customers who do not use the information terminal.

### (Modified Example)

In the embodiment described above, when a customer acquires, from the terminal controller 20, the information on the self-registered purchased product using the information terminal 10, the notification is given in a state where the light emitting color of the patrol lamp 37 is replaced by the predetermined color. In this regard, the attendant terminal 40 may be used to notify the person in charge that there is the self-POS terminal 30 that has acquired the information on the purchased product from the terminal controller 20.

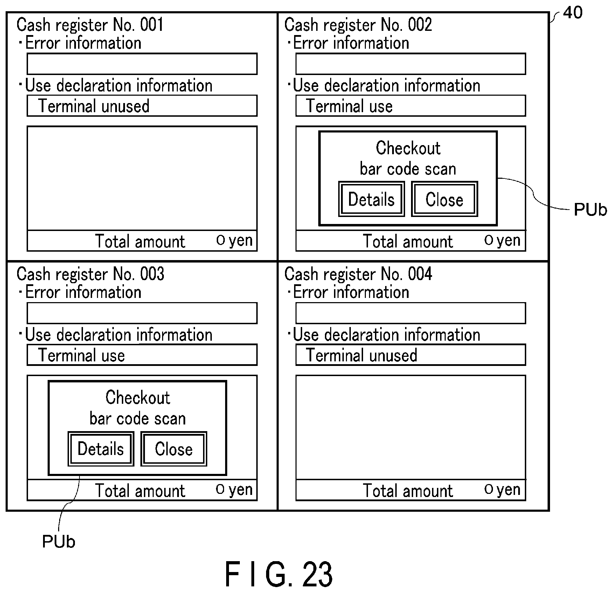

FIG. 23 is a screen example in the case of performing notification using the attendant terminal 40. This example is a case where the statuses of the four self-POS terminals 30 are monitored by the attendant terminal 40. The two self-POS terminals 30 in which the cash register No. 001 and the cash register No. 004 are set indicate that a customer not using the information terminal 10 is checking out, and the two self-POS terminals 30 of the cash register No. 002 and the cash register No. 003 indicate that a customer using the information terminal 10 is checking out. When the customer uses the information terminal 10, a pop-up image PUb is displayed. "Terminal use" is displayed as use declaration information. When the customer does not use the information terminal 10, the pop-up image PUb is not displayed. "Terminal unused" is displayed as use declaration information. With such an image, the attendant can easily identify whether or not the customer who is checking out is using the information terminal 10. Note that it is needless to say that a greater effect can be obtained by using both the notification by the attendant terminal 40 and the notification by the patrol lamp 37.

When displaying the second checkout completion screen SCf, the processor 71 of the attendant terminal 40 may provide notification that the receipt is to be presented to the person in charge by voice from the speaker 38.

In the above embodiment, on the registration screen SCc, the registration description information corresponding to the purchased product data with the type flag "1" and the registration description information corresponding to the purchased product data with the type flag "0" can be identified by the presence or absence of a mark. In this regard, it may be identified by a difference in the type of the mark. Alternatively, the registration description information corresponding to the purchased product data with the type flag "1" and the registration description information corresponding to the purchased product data with the type flag "0" may be displayed separately so as to be identifiable.

The checkout device according to the above-described embodiment may be expressed as follows.
(1) A checkout device including:
   a first acquisition means for acquiring information on a product to be purchased by a customer based on data input by the customer's operation on an input device;
   a second acquisition means for acquiring, from an external system, information on a product to be purchased by a customer, the information stored in the external system, based on data input by the customer's operation on an information terminal; and
   a checkout means for making a checkout based on the information on the product acquired by the first acquisition means and the second acquisition means.
(2) The checkout device according to (1), further including
   a reception means for receiving identification information for identifying the information on the product stored in the external system,
   wherein the second acquisition means acquires the information on the product identified by the identification information received by the reception means from the external system.
(3) The checkout device according to (1) or (2), further including
   an invalidation means for invalidating a customer's operation on the input device while the second acquisition means acquires the information on the product from the external system.
(4) The checkout device according to (1) to (3), further including
   a notification means for providing notification that the second acquisition means has acquired the information on the product from the external system.
(5) The checkout device according to (1) to (4), further including
   a control means for changing an image to be displayed on a display device when the checkout by the checkout means is completed between a case where the second acquisition means has acquired the information on the product from the external system and a case where the second acquisition means has not acquired the information on the product from the external system.
(6) A checkout program for causing a computer of a checkout device to execute
   a first acquisition means for acquiring information on a product to be purchased by a customer based on data input by the customer's operation on an input device;
   a second acquisition means for acquiring, from an external system, information on a product to be purchased by a customer, the information stored in the external system, based on data input by the customer's operation on an information terminal; and
   a checkout means for making a checkout based on the information on the product acquired by the first acquisition means and the second acquisition means.

The program according to the present embodiment may be transferred in a state of being stored in an electronic device, or may be transferred in a state of not being stored in the electronic device. In the latter case, the program may be transferred via a network or may be transferred in a state of being recorded in a recording medium. The recording medium is a non-transitory tangible medium. The recording medium is a computer-readable medium. The recording medium may be any medium that can store a program and can be read by a computer, such as a CD-ROM or a memory card, and the form thereof is not limited.

While some embodiments of the present invention have been described, these embodiments have been presented by way of example only, and are not intended to limit the scope of the inventions. The novel embodiments may be embodied in a variety of other forms; various omissions, substitutions, and changes in the form of the embodiments described herein may be made without departing from the spirit of the inventions. The accompanying claims and their equivalents are intended to cover such embodiments or modifications as would fall within the scope of the inventions.

## Claims

1. A checkout device comprising:
a first acquisition unit configured to acquire information on a product to be purchased by a customer based on data input by the customer's operation on an input device;
a second acquisition unit configured to acquire, from an external system, information on a product to be purchased by a customer, the information stored in the external system, based on data input by the customer's operation on an information terminal; and
a checkout unit configured to make a checkout based on the information on the product acquired by the first acquisition unit and the second acquisition unit.

2. The checkout device according to claim 1, further comprising
a reception unit configured to receive identification information for identifying the information on the product stored in the external system,
wherein the second acquisition unit is configured to acquire the information on the product identified by the identification information received by the reception unit from the external system.

3. The checkout device according to claim 1, further comprising
an invalidation unit configured to invalidate a customer's operation on the input device while the second acquisition unit acquires the information on the product from the external system.

4. The checkout device according to claim 1, further comprising
a notification unit configured to provide notification that the second acquisition unit has acquired the information on the product from the external system.

5. The checkout device according to claim 1, further comprising
a control unit configured to change an image to be displayed on a display device when the checkout by the checkout unit is completed between a case where the second acquisition unit has acquired the information on the product from the external system and a case where the second acquisition unit has not acquired the information on the product from the external system.

6. A recording medium recording a checkout program for causing a computer of a checkout device to realize
a first acquisition function of acquiring information on a product to be purchased by a customer based on data input by the customer's operation on an input device;
a second acquisition function of acquiring, from an external system, information on a product to be purchased by a customer, the information stored in the external system, based on data input by the customer's operation on an information terminal; and
a checkout function of making a checkout based on the information on the product acquired by the first acquisition function and the second acquisition function.
